## Europäisches Patentamt
## European Patent Office
## Office européen des brevets

(19)

(11) Veröffentlichungsnummer: **0 116 676**
**B1**

(12)

# EUROPÄISCHE PATENTSCHRIFT

(45) Veröffentlichungstag der Patentschrift:
**21.09.88**

(51) Int. Cl.⁴: **B 60 C 27/06,** B 60 C 27/14,
B 60 C 27/12

(21) Anmeldenummer: **83106116.3**

(22) Anmeldetag: **22.06.83**

(54) Gleitschutzvorrichtung für Fahrzeugreifen.

(30) Priorität: **14.02.83 DE 3305073**
**20.05.83 DE 3318551**

(43) Veröffentlichungstag der Anmeldung:
**29.08.84 Patentblatt 84/35**

(45) Bekanntmachung des Hinweises auf die Patenterteilung:
**21.09.88 Patentblatt 88/38**

(84) Benannte Vertragsstaaten:
**AT BE CH FR GB LI NL SE**

(56) Entgegenhaltungen:
**EP-A-0 081 792**
**DE-A-3 139 197**
**US-A-1 620 894**
**US-A-2 443 219**
**US-A-2 898 966**

(73) Patentinhaber: **ACCIAIERIE WEISSENFELS S.P.A.,**
**Tarvisio, I-33010 Fusine Valromana (IT)**

(72) Erfinder: **Melzi, Carlo, Dr. Ing., Tarvisio, I-33010**
**Fusine Valromana (IT)**
Erfinder: **Gregorutti, Paolo, Dr. Ing., Tarvisio,**
**I-33010 Fusine Valromana (IT)**

(74) Vertreter: **Geyer, Werner, Dr.- Ing., Hermann-**
**Vogel- Strasse 12, D-8000 München 40 (DE)**

LIBER, STOCKHOLM 1988

## Beschreibung

Die Erfindung bezieht sich auf eine Gleitschutzvorrichtung für Fahrzeugreifen mit einer in montiertem Zustand der Vorrichtung gegen die Innenseite und die Außenseite des Reifens zur Anlage kommenden inneren und äußeren Halterung für sich über die Reifenlauffläche erstreckende Kettenstrangabschnitte, bei der die innere Halterung im montierten Zustand im wesentlichen kreisförmig geschlossen ausgebildet ist und ein starres Mittelteil sowie zwei starre, an diesem jeweils über ein Drehgelenk verschwenkbar befestigte Seitenteile aufweist, die zum Überstreifen der inneren Halterung über die Reifenlauffläche vom Mittelteil aus nach außen aufklappbar, in Schließrichtung der inneren Halterung über Federeinrichtungen vorgespannt und an ihren freien Enden mit im montierten Zustand der inneren Halterung verrastend wirksamen Verschlußgliedern versehen sind.

Bei Gleitschutzvorrichtungen für Fahrzeugreifen (oftmals als "Schneeketten" bezeichnet) steht die Problematik einer besonders leichten Montage im Vordergrund, wobei die montierende Person möglichst rasch und möglichst ohne Bewegungen des Fahrzeugs die Kette am Fahrzeugrad montieren können soll.

Aus der DE-OS-2 020 452 (Fig. 15) ist eine Gleitschutzvorrichtung bekannt, bei der für die innere Halterung nicht ein Federstahlbügel, sondern eine aus drei starren Einzelteilen bestehender Halterungsbügel eingesetzt wird. Zur Montage dieser bekannten Gleitschutzvorrichtung können die beiden verschwenkbar am Mittelteil angeordneten starren Seitenteile der inneren Halterung zwar auseinanderbewegt und dadurch die Halterung über den Reifen übergestülpt werden. Anschließend ist es jedoch erforderlich, daß die Bedienungsperson um den Reifen auf dessen Innenseite herumlangt, um dort von Hand die Enden der Seitenteile gegeneinander zu führen und geeignet aneinander zu befestigen. Hiernach muß eine ähnliches Spannen auch an der äußeren Halterung vorgenommen werden. Die vorbekannte Kette läßt zwar eine vollständige Montage auch bei festsitzendem Fahrzeugreifen zu, so daß der endgültige Sitz der Schneekette ohne Rangieren des Fahrzeugs erzielt werden kann. Die Handhabung der bekannten Kette beim Montieren ist jedoch hinsichtlich der Betätigung der inneren Halterung sehr umständlich, erfordert Geschicklichkeit der Bedienungsperson und ist, da Ketten meist unter ungünstigen Witterungsumständen aufgezogen werden müssen, häufig auch mit einer erheblichen Verschmutzung der Bedienungsperson bei der Montage verbunden.

Aus der US-PS-1 511 685 ist ferner eine Gleitschutzvorrichtung der eingangs genannten Art bekannt, bei der die innere Halterung wiederum aus einem starren Mittelteil mit zwei an diesem verschwenkbar befestigten starren Seitenteilen besteht. Über jeweils mit ihren Enden zum einen im mittleren Bereich des starren Mittelteiles und zum anderen im mittleren Bereich der starren Seitenteile befestigte Schraubenfedern sind die Seitenteile gegenüber dem Mittelteil in Schließrichtung vorgespannt und mit an ihren freien Enden im montierten Zustand verrastend wirksamen Verschlußgliedern versehen. Durch die quer über die Innenfläche der inneren Halterung verlaufenden Federn wird jedoch der zur Verfügung stehende freie Öffnungsbereich für das Überstreifen der Halterung über die Reifenlauffläche stark eingeschränkt, da die Federn in einem recht merklichen Abstand vom Gelenkpunkt zwischen dem jeweiligen Seitenteil und dem Mittelteil verlaufen und zwar innerhalb des von der inneren Halterung umschlossenen Kreisbereiches. Der Einsatz stärkerer Federn für eine einwandfreie Schließwirkung ist hier nicht möglich, da ansonsten wegen des relativ großen Abstands der Federn vom Drehpunkt eine Betätigung der inneren Halterung mit sinnvollem Kräfteaufwand nicht mehr vornehmbar wäre. Darüberhinaus muß die Bedienungsperson beim Aufklappen der Seitenteile zum Überstreifen der Halterung darauf achten, daß sich die Seitenteile nicht so weit öffnen, daß die Wirkungslinie der eingesetzten Federn auf die andere Seite des Gelenkes hinüberwandert, weil dann in Öffnungs-, nicht mehr in Schließrichtung vorgespannt würde. Die Handhabung der vorbekannten Kette ist daher sehr unpraktisch, weil die eingesetzten Federn den von der inneren Halterung umschlossenen Bereich nicht vollständig für das Überstülpen über die Reifenlauffläche freigeben oder, will man dies erreichen, ein so starkes Aufklappen der Seitenteile erforderlich wird, daß der Öffnungs- bzw. Spreizwinkel derselben relativ zum Mittelteil die Montage bei den beengten Platzverhältnissen üblicher Fahrzeuge im Kotflügelbereich nicht mehr zuläßt. Hinzukommt der Nachteil, daß die von den bei der bekannten Kette eingesetzten Federn ausgeübten Schließkräfte relativ gering sein müssen, da beim Einsetzen stärkerer Federn das für die Montage erforderliche Aufspreizen der seitlichen Halterungen ansonsten stark behindert oder gar unmöglich gemacht würde. Ferner setzen die bei der bekannten Kette eingesetzten Verrastungselemente an den Enden der Seitenteile voraus, daß bei Erreichen der geschlossenen Position der inneren Halterung keine weitere Vorspannung durch die Federn in Schließrichtung mehr existiert, da ansonsten die Gefahr bestünde, daß sich die Verrastungselemente wieder öffnen könnten, weil bei einer fortbestehenden Vorspannung in Schließrichtung ein Aushaken möglich wäre. Da bei der bekannten Kette ferner die Seitenteile am Mittelteil über einfache Drehgelenke befestigt sind, ist die innere Halterung insgesamt in Schließrichtung gesehen instabil und nicht in sich geschlossen starr, so daß sie, wie in Fig. 2 dieser Druckschrift gezeigt ist, in Schließrichtung auch durch vollständiges Umklappen der Seitenteile in eine eingeklappte Transportposition bei relativ geringem Platzverbrauch gebracht werden kann. Die Möglichkeit einer solchen Einklappung steht aber der Ausbildung eines in sich geschlossenen starren Innenringes bei vollständig montierter Kette entgegen.

Ausgehend hiervon liegt der Erfindung die Aufgabe zugrunde, eine Kette der eingangs genannten Art so zu verbessern, daß bei der Montage die durch die Vorspannfedern für die innere Halterung bewirkten Beeinträchtigungen beim Überstülpen der inneren Halterung über die Reifenlauffläche so gut wie vollständig vermieden werden und im montierten Zustand die Ausbildung einer in sich formstarren, geschlossenen inneren Halterung sichergestellt ist.

Erfindungsgemäß wird dies bei einer Gleitschutzvorrichtung der eingangs genannten Art dadurch erreicht, daß die Federeinrichtungen aus an den Drehgelenken angeordneten Spiral-, Schenkel- oder Blattfedern bestehen, deren Vorspannung so gewählt ist, daß im geschlossenen Zustand der inneren Halterung die Seitenteile durch die Federeinrichtungen unter Druck gegen in Schließrichtung der inneren Halterung wirksame Endanschläge in Anlage gehalten sind.

Die sich bei der gattungsgemäßen Gleitschutzvorrichtung quer über die Öffnungsfläche des Kreisringes erstreckenden Vorspannfedern, deren Angriffspunkte an den jeweiligen Halterungs-Einzelteilen in einer ganz merklichen Entfernung von den Drehgelenken sitzen, sind bei der erfindungsgemäßen Lösung vollständig vermieden, weshalb beim Aufklappen der Seitenteile ein Überstülpen der inneren Halterung in nur geringem Abstand von der Reifenlauffläche möglich ist, weil keinerlei hinderliche Federn mehr im Wege stehen. Während bei der gattungsgemäßen Gleitschutzvorrichtung erst eine anfängliche Bewegung der Räder das eine freie Ende der inneren Halterung in Kontakt mit dem Reifen und bei fortgesetzter Raddrehung das entgegengesetzte freie Ende der Halterung in verhakenden Kontakt mit diesem bringt, somit also eine Reifenbewegung für das Einhaken der Enden der inneren Halterung erforderlich ist, besteht bei der erfindungsgemäßen Gleitschutzvorrichtung keinerlei Notwendigkeit für eine Raddrehung mehr, um das Erreichen eines geschlossenen Sitzes der inneren Halterung sicherzustellen. Durch die erfindungsgemäß eingesetzten Federn ist auch die Möglichkeit gegeben, hier ausreichend starke Federkräfte vorzusehen, um ein selbsttätiges Schließen der inneren Halterung und ein ausreichend sicheres Geschlossenhalten derselben im montierten Zustand zu gewährleisten. Dadurch, daß die Seitenteile im geschlossenen Zustand der inneren Halterung gegen einen in Schließrichtung wirksamen Anschlag unter Einfluß der Schließkräfte angedrückt werden, wird die innere Halterung im montierten Zustand als ein in sich geschlossenes, formstarres Teil ausgebildet, das seine Form und seine Steifigkeit auch nicht verliert, wenn gewisse in Öffnungsrichtung wirksame Kräfte plötzlich auftreten sollten, da hier eine gegen Anschlag wirkende Vorspannung vorliegt. Die erfindungsgemäße Gleitschutzvorrichtung läßt sich besonders einfach montieren, wobei auch das Aufspreizen der Seitenteile in Öffnungsrichtung nur soweit erfolgen muß, daß der freigegebene Platz ein Überstülpen über die Reifenlauffläche gerade ermöglicht. Ist die innere Halterung einmal über die Reifenlauffläche hinübergeführt, müssen von der Bedienungsperson nur noch die beiden Seitenteile freigegeben werden, wonach infolge der Vorspannung durch die Schließfedern die innere Halterung sich sogleich selbsttätig in ihre geschlossene Form überführt, in der die Verschlußglieder an den Enden der Seitenteile verrastend wirksam werden und gleichzeitig die Druckanlage gegen die in Schließrichtung wirksamen Endanschläge aufgebaut wird. Die Erfindung erlaubt somit eine besonders schnelle und einfache, auch für ungeübte Bedienungspersonen leicht durchführbare Montagemöglichkeit der Gleitschutzvorrichtung.

Die Bedienungsperson muß zur Montage nur die beiden Seitenteile der inneren Halterung mit ihren Händen ergreifen, diese so weit radial gegenüber dem Mittelteil nach außen verschwenken, bis die innere Halterung über die Reifenlauffläche überschiebbar ist, und nach dem Überstreifen derselben die beiden Seitenteile freigeben, wonach sich diese Halterung infolge der in den Drehgelenken angeordneten Federeinrichtungen sofort in ihre Endposition verschwenkt, in der sie unter einer dann noch wirkenden Vorspannung gehalten wird. Dabei stellt die innere Halterung ein in sich geschlossenes, starres Gebilde dar, das einen guten Sitz der Gleitschutzvorrichtung bezüglich der Innenseite des Fahrzeugreifens und einen vorzüglichen Verankerungspunkt für die sich über die Reifenlauffläche erstreckenden Kettenstrangabschnitte abgibt. Bei der erfindungsgemäßen Gleitschutzvorrichtung entfällt somit völlig ein von der Bedienungsperson vorzunehmender Spannvorgang für die innere Halterung und gleichermaßen jegliche Notwendigkeit, das Fahrzeugrad (auch nicht in geringem Maße) verdrehen zu müssen. Die erfindungsgemäße Gleitschutzvorrichtung eignet sich demgemäß auch gut zur Montage bei einem völlig festsitzenden Fahrzeug, bei dem ein Rangieren nicht mehr möglich ist.

In vorzugsweiser Ausgestaltung der erfindungsgemäßen Gleitschutzvorrichtung ist weiterhin vorgesehen, daß in jedem Drehgelenk Endanschläge zur beidseitigen Begrenzung der Verschwenkbewegung des angelenkten Seitenteiles relativ zum Mittelteil angeordnet sind, wodurch zum einen eine maximale Öffnungsposition festgelegt und ein zu starkes Aufklappen der Seitenteile für die Montage vermieden wird, während andererseits, in Schließrichtung gesehen, die dortigen Endanschläge zur Aufnahme der in Schließrichtung wirksamen Druckanlage bei geschlossenem Zustand der inneren Halterung unter Vorspannung der Federn dienen.

Wenn bei einer erfindungsgemäßen Gleitschutzvorrichtung in den Drehgelenken Spiralfedern angeordnet sind, wird bevorzugt die Vorspannung jeder Spiralfeder von der Außenseite der Drehgelenke her einstellbar ausgebildet, wobei, erneut vorzugsweise, das radial innenliegende Ende der Spiralfeder in einen am Mittelteil der inneren Halterung befestigten Drehbolzen eingreift, der relativ zum Mittelteil verdrehbar und in jeder Verdrehstellung von außen her arretierbar ist. Hierdurch läßt sich eine relativ einfache Verstellmöglichkeit für die Größe der Vorspannkraft der Schließfedern schaffen, die bei nicht-montierter Gleitschutzvorrichtung ohne große Schwierigkeiten betätigt werden kann.

Bei der erfindungsgemäßen Gleitschutzvorrichtung werden in weiterer vorteilhafter Ausgestaltung bei geschlossener innerer Halterung die Endanschläge durch eine formschlüssige Verriegelung der Seitenteile miteinander ausgebildet, wobei, erneut vorzugsweise, das Mittelteil und die Seitenteile der inneren Halterung aus gebogenem Metallrohr geformt sind, das Metallrohr eines Seitenteiles in seinem Endbereich einen sich erweiternden Querschnitt aufweist, innerhalb dessen eine Verriegelungsklinke angeordnet ist, und vom Ende des Metallrohres des anderen Seitenteiles ein Verriegelungsbolzen vorsteht, der zum Schließen der inneren Halterung in die Verriegelungsklinke einführbar und in dieser Lage verriegelbar ist. Dabei wird vorteilhafterweise die Verriegelungsklinke in Form einer in Schließrichtung federvorgespannten Halteschere ausgebildet.

Es kann in bestimmten Einsatzfällen auch vorteilhaft sein, die eingesetzten Federn oder Federkombinationen in ihrer Federkennlinie so auszubilden, daß z. B. die Vorspannkraft nicht etwa proportional zum Auslenkungsweg, sondern, nur in unterproportionaler Weise zu diesem zunimmt. Dabei muß lediglich sichergestellt sein, daß beim Freigeben der Schenkel nach dem Überstülpen der inneren Halterung über den Fahrzeugreifen das gewünschte automatische und sichere Zusammenschnappen der beiden Schenkel erfolgt und diese auch im geschlossenen Zustand ausreichend aneinandergedrückt werden.

Die Erfindung wird nachfolgend anhand der Zeichnung beispielshalber noch näher erläutert. Es zeigen:

Fig. 1 eine Ansicht einer erfindungsgemäßen Gleitschutzvorrichtung von der Außenseite des Fahrzeugreifens her, bei der zur Montage gerade die innere Halterung über die Reifenlauffläche geführt wird;

Fig. 2 eine Ansicht der in Fig. 1 gezeigten Gleitschutzvorrichtung von der Reifeninnenseite her im Montage-Endzustand (geschlossene innere Halterung);

Fig.3 eine teilweise geschnittene Darstellung eines Drehgelenkes (mit herausgenommener Spiralfeder);

Fig. 4 einen Schnitt längs Linie A-A in Fig. 3;

Fig. 5 eine Detaildarstellung einer in ein Drehgelenk eingelegten Spiralfeder als Vorspannfeder;

Fig. 6 eine Prinzipdarstellung des Endes eines Seitenteiles aus Aluminium-Rundrohr mit in diesem angeordneter Verriegelungseinrichtung, und

Fig. 7 eine weitere Ausführungsform der hinteren Halterung (von der Reifeninnenseite her gesehen) in geschlossenem Zustand.

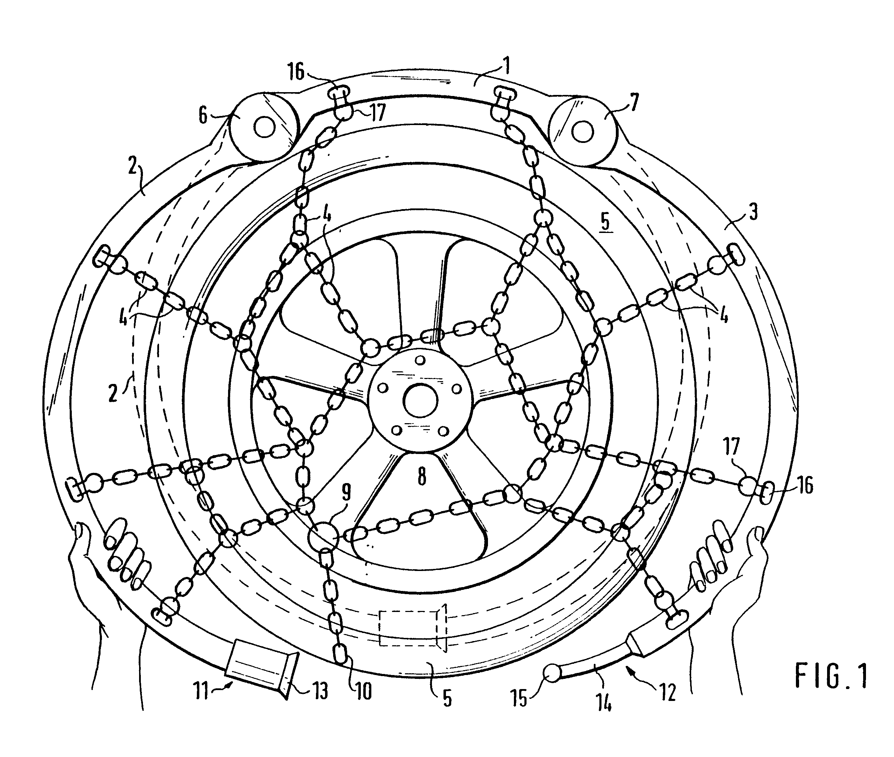

In Fig. 1 ist eine Gleitschutzvorrichtung gezeigt, bei der die innere Halterung aus einem starren, aus gebogenem Flachstahl geformten Mittelteil 1 sowie zwei ebenfalls starren, wiederum aus gebogenem Flachstahl geformten Seitenteilen 2 und 3 besteht. Das Mittelteil 1 und die Seitenteile 2 und 3 sind über kurze Kettenstrangabschnitte 4, die in montiertem Zustand über die Lauffläche eines Fahrzeugreifens 5 verlaufen, mit einer äußeren, als Seitenkette 8 ausgebildeten Halterung verbunden. Die äußere Seitenkette weist an ihrem einen Ende eine Ringöse 9 auf, durch die ihr anderes, freies Ende 10 (oder ein an ihrem anderen Ende befestigter Spannstrang) hindurchgeführt und umgelenkt wird, so daß zum abschließenden Spannen bei montierter Kette nurmehr ein festes Anziehen am freien Ende 10 der Seitenkette 8 erforderlich ist, um einen straffen Sitz und die gewünschte Spannung zu gewährleisten. Durch (in Fig. 1 nicht dargestellte) geeignete Haken oder sonstige Befestigungsmittel wird nach diesem abschließenden Spannen der Seitenkette 8 deren freies Ende in geeigneter Form z. B. an der Seitenkette befestigt. Es besteht auch die Möglichkeit, eine geeignete Rücklaufsperre einzusetzen, um - ungeachtet der Befestigung des freien Endes 10 der Seitenkette 8 - auf jeden Fall ein unerwünschtes zurücklaufen des Endes 10 der Kette 8 durch die Ösen 9 nach dem letzten Spannen zu verhindern.

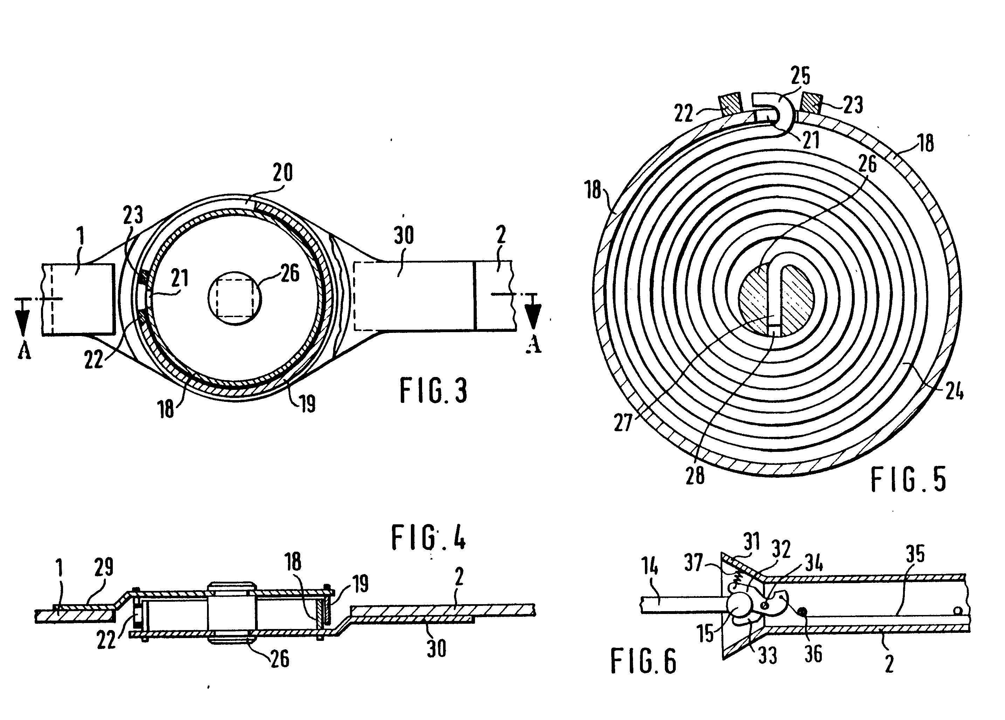

Die Seitenteile 2 und 3 sind über Drehgelenke 6 und 7 mit dem starren Mittelteil 1 verbunden. An den Drehgelenken 6 und 7 sind (in Fig. 1 nicht erkennbar) Federn angeordnet, welche die Seitenteile 2 und 3 stets in Schließrichtung) d.h. in Richtung auf eine kreisförmig vollständig geschlossene innere Halterung hin vorspannen. Als solche Vorspannfedern können alle geeigneten Federn wie Schenkelfedern oder Blattfedern eingesetzt werden. Ein weiteres besonders geeignetes Beispiel für hierbei verwendbare Federn, nämlich Spiral-Federn, ist in Fig. 5 im einzelnen gezeigt, worauf weiter unten zurückzukommen sein wird.

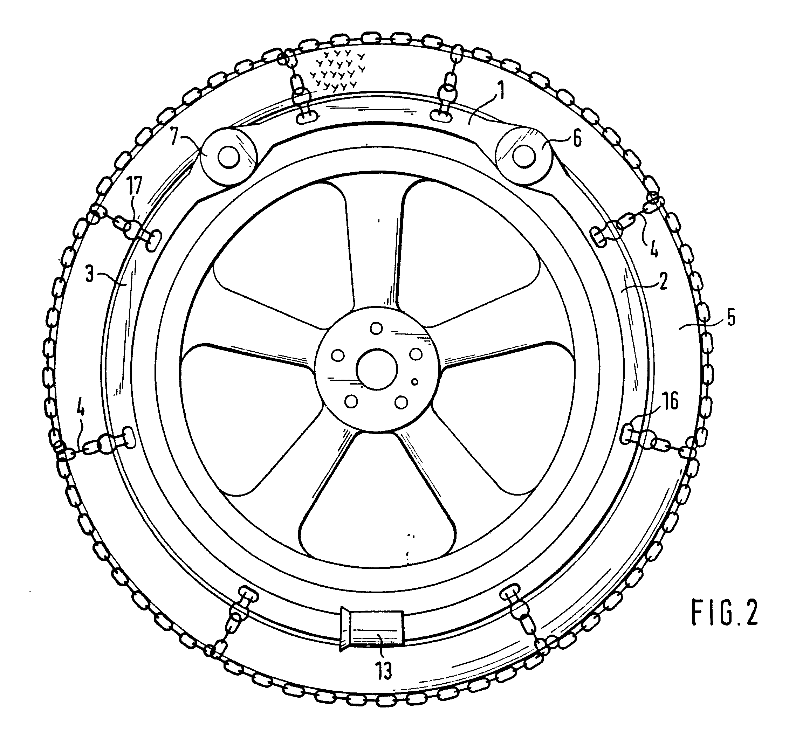

Zur Montage der Gleitschutzvorrichtung wird die hintere Halterung im unteren Bereich der beiden Seitenteile 2 und 3 mit den Händen ergriffen, wie dies in Fig. 1 im Prinzip dargestellt ist. Sodann werden die Seitenteile 2 und 3 gegen die Wirkung der (auch im Schließzustand noch vorgespannten) Federn in den Drehgelenken 6 und 7 nach außen so weit geöffnet, bis sich die innere Halterung bequem über die Lauffläche des Reifens auf die Reifeninnenseite überstülpen läßt. Sobald die aus den Teilen 1, 2 und 3 bestehende innere Halterung über die Reifenlauffläche auf die Reifeninnenseite hin übergestülpt ist, kann die Bedienungsperson die beiden Seitenteile 2 und 3 freigeben. Durch die Wirkung der in den Gelenken 6 und 7 eingesetzten Federn werden die freien Enden der beiden Seitenteile 2 und 3 automatisch so geschlossen, daß insgesamt eine geschlossene Form der inneren Halterung als Montage-Endform sich einstellt. Die Seitenteile führen dabei eine relative Verschwenkbewegung zum Mittelteil 1 aus, wie dies aus Fig. 1 durch die gestrichelte Darstellung der Seitenteile 2 und 3 ersichtlich ist. Infolge der vorgegebenen Geometrie der Kettenstrangabschnitte 4 stellt sich dabei auch automatisch eine zentrierte Form der inneren Halterung ein, wie dies aus Fig. 2 ersichtlich ist. Die Darstellung nach Fig. 2 zeigt die inneren Halterung, von der Fahrzeuginnenseite her gesehen, in geschlossenem Montage-Endzustand, d.h. nachdem die Bedienungsperson die Seitenteile 2 und 3 freigeben hat. Die in Fig. 2 dargestellte Lage der inneren Halterung bedarf dann keiner Korrektur mehr, so daß auf der Vorderseite nur noch das durch die Öse 9 hindurchgeführte Ende 10 der Seitenkette 8 fest angezogen werden muß, um auch auf der Reifenaußenseite einen festen Sitz der äußeren Halterung zu erreichen. In geeigneter Form wird sodann nur noch das freie Ende 10 der Seitenkette 8 nach dem Festziehen in bekannter Weise befestigt.

Im Mittelteil 1 sowie in den Seitenteilen 2 und 3 sind Öffnungen 16 vorgesehen, in die geeignete Ösen 17 eingehängt sind, an denen wiederum die Kettenstrangabschnitte 4 befestigt sind. Die Befestigung der Ösen 17 in den Öffnungen 16 ist so vorgenommen, daß sie aus der in Fig. 1 gezeigten Montage-Ausgangsstellung (Ösen 17 radial nach innen gerichtet) in die in Fig. 2 gezeigte Montage-Endstellung (radial nach außen gerichtet) umschwenken können.

Aus Fig. 1 ist entnehmbar, daß am freien Ende 11 des Seitenteiles 2 eine Aufnahmehülse 13 angebracht und im wesentlichen als zylindrisches offenes Rohrteil ausgebildet ist, das in seinem Öffnungsbereich einen etwa konisch nach außen hin sich erweiternden Rand aufweist. Am freien Ende 12 des anderen Seitenteiles 3 ist ein vorstehender Endbolzen 14 vorgesehen, der an seinem Ende ein Formteil 15 trägt, das beim Schließen der hinteren Halterung von der Hülse aufgenommen und in dieser bis zur Endstellung hin geführt wird. Die Längenverhältnisse zwischen Hülse 13 und Endbolzen 14 sowie Formteil 15 sind nicht maßstabsgerecht in Fig. 1 eingezeichnet. Aus Fig. 2 ist ersichtlich, daß die Auslegung der Größen so erfolgt ist, daß bei geschlossenem Zustand der vorstehende Endbolzen 14 samt Formteil 15 vollständig in der Aufnahmehülse 13 aufgenommen ist. Die Federn in den Drehgelenken 6 und 7 sind so vorgespannt, daß sie auch bei geschlossener Stellung der inneren Halterung noch die freien Enden der Seitenteile 2 und 3 mit einer gewissen Kraft gegeneinander andrücken, so daß die Seitenteile 2 und 3 sich in ihrer Ruhestellung gegeneinander abstützen. Dies kann auf vielerlei Weise geschehen, etwa dadurch, daß das Formteil 15 innerhalb der Hülse 13 sich gegen einen geeigneten Anschlag abstützt, der an dieser oder am freien Ende 11 des Seitenteiles 2 ausgebildet ist. Es könnte aber auch innerhalb der Hülse 13 eine (in Fig. 1 und 2 nicht gezeigte) Verriegelungseinrichtung, etwa in Form einer Schnappeinrichtung, vorgesehen sein, die bei Einführung des Formteiles 15 in die Hülse 13 bei der gewünschten Endstellung eine Schnapp-Verriegelung auslöst, so daß dann die beiden Seitenteile 2 und 3 auch noch starr miteinander verriegelt sind und ein seitliches Öffnen auch von Hand nicht mehr möglich wäre. In diesem Fall wäre jedoch noch eine weitere Einrichtung vorzusehen, die für den Fall der Demontage ein schnelles Öffnen eines solchen Verschlusses gewährleistet. Praktische Versuche haben jedoch gezeigt, daß auch unter der reinen Vorspannung der Federn in den Drehgelenken 6 und 7 ein ausreichend sicheres Schließen der inneren Halterung bei allen Geschwindigkeiten, die nach dem Aufziehen von Schneeketten sinnvollerweise gefahren werden können, vollständig sichergestellt ist.

Die nähere Darstellung einer Ausführungsform für die Drehgelenke 6 bzw. 7 findet sich in den Fig. 3 bis 5:

Fig. 3 soll schematisch ein solches Drehgelenk darstellen (in seiner maximalen Aufweitstellung), bei dem der Endbereich des Mittelteils ebenso wie der des Seitenteils 2 der Einfachheit halber als geradlinig eingezeichnet sind. Wie aus der Schnittdarstellung nach Fig. 4 ersichtlich, ist dabei am Ende des Mittelteils 1 eine Halteplatte 29 angebracht, auf der ein Stützbolzen 26 sitzt. Der Stützbolzen 26 ist gegenüber der Halteplatte 29 nicht verdrehbar.

Am Ende des Seitenteiles 2 ist eine Trageplatte 30 befestigt, die ihrerseits verdrehbar auf dem Stützbolzen 26 sitzt. Dabei wird die Trageplatte 30 vom Stützbolzen 26 bei ihrer Drehung geführt.

Auf der Trageplatte 30 ist eine kreisförmig angeordnete Rundhülse 18 befestigt, die zur Halteplatte 29 hin offen ist (Fig. 4). In dem von dieser Rundhülse 18 und dem Bolzen 26 radial begrenzten Bereich ist eine Spiralfeder 24 angeordnet (Fig. 5), deren innerer Schenkel an seinem Ende 27 in eine Radialbohrung 28 im Bolzen 26 eingesteckt ist. Der abgebogene Außenschenkel 25 der Spiralfeder 24 ragt durch eine Öffnung 21 in der Rundhülse 18 nach außen und ist dort etwa in der in Fig. 5 gezeigten Weise umgebogen, wobei durch die Formgebung sichergestellt ist, daß ein unerwünschtes Hineindrücken des Außenschenkels 25 in den Raum innerhalb der Rundhülse 18 nicht möglich ist. Am Außenumfang der Rundhülse 18 sind weiterhin, beidseits der Öffnung 21, zwei Anschläge 22 und 23 als Endanschläge für die zwischen dem Seitenteil 2 und dem Mittelteil 1 ausführbare Verschwenkbewegung angeordnet. Diese Anschläge sind in geeigneter Weise starr mit der Rundhülse 18 verbunden.

An der Halteplatte 29 ist ebenfalls eine als Abdeckhülse ausgebildete Rundhülse 19 befestigt (Fig. 3 und 4), die mit einem geringen radialen Abstand zur Rundhülse 18 diese außen umschließt. In der Rundhülse 19 ist jedoch eine Ausnehmung 20 vorgesehen, in die die beiden Anschläge 22 und 23 sowie der Außenschenkel 25 der Spiralfeder 24 hineinreichen. Wird nun eine Verschwenkbewegung zwischen dem Mittelteil 1 und dem Seitenteil 2 erzeugt, dann kann eine relative Verschwenkbewegung zwischen der Trageplatte 30 und der Halteplatte 29 solange erfolgen, bis entweder der Anschlag 22 oder der Anschlag 23 an dem entsprechenden Ende der Aussparung 20 in der Abdeckhülse 19 anstoßen. Bei geeigneter Ausbildung des umgebogenen Außen-Schenkels 25 der Spiralfeder 24 könnte auch auf die Anschläge 22 und 23 verzichtet werden, wenn sichergestellt ist, daß der nach außen vorstehende schenkel 25 selbst als geeigneter Anschlag benutzt werden kann.

Bei einer Verdrehung zwischen Mittelteil 1 und Seitenteil 2 tritt eine entsprechende Verdrehung zwischen dem an der Halteplatte 29 befestigten Stützbolzen 26 und der an der Trageplatte 30 befestigten Rundhülse 18 auf, so daß dann eine entsprechende Vorspannung der Spiralfeder 24 erzeugt wird. Die Spiralfeder 24 ist aber so in das betreffende Gelenk eingebaut, daß bereits in ihrer Ausgangsstellung (in Fig. 3: Anschlag 22 stößt an Rundhülse 19 an) eine Vorspannung der Feder 24 so stark vorliegt, daß - in Verbindung mit dem anderen Gelenk - ein sicheres Schließen der inneren Halterung bei Betrieb gewährleistet ist. Die Befestigung des Stützbolzens 26 an der Halteplatte 29 kann ganz starr und unverrückbar sein. Es kann aber auch eine Befestigung derart eingesetzt werden, daß der Stützbolzen bei fertig montiertem Gelenk zur Verstellung der Vorspannung der Spiralfeder 24 von außen her verdreht und nach Erreichen der gewünschten Vorspannung wieder starr zur Halteplatte 29 festgelegt werden kann.

Die Stellung der Spiralfeder nach Fig. 5 entspricht nicht der Stellung des Gelenkes nach Fig. 3, sondern ist vielmehr um 90° nach oben hin versetzt.

Bei den Darstellungen der Fig. 1 bis 4 sind das Mittelteil 1 und die beiden Seitenteile 2 und 3 der inneren Halterung jeweils aus einem gebogenen bandförmigen Metall-Flachband ausgeführt.

Diese Einzelelemente der inneren Halterung können jedoch im Prinzip ohne weiteres auch z. B. aus einem Rundstahl oder rohrförmig ausgebildet sein. In Fig. 6 ist beispielsweise das Ende eines Seitenteiles 2 aus rohrförmigem Material gezeigt. Dabei ist der Endbereich 31 konisch erweitert. Innerhalb des erweiterten Endbereiches 31 ist eine Sperrklinke angebracht, die einen oberen Klinkenhebel 32 und einen unteren Klinkenhebel 33 aufweist, die beide auf einem Klinkendrehbolzen 34 abgestützt sind. Dabei kann, wie im gezeigten Fall, der untere Klinkenhebel 33 lagefest angebracht sein, während der obere Klinkenhebel 32 um den Bolzen 34 verschwenkbar ist. Mit einer (in Fig. 6 nur schematisch eingezeichneten) Feder 37 wird dabei der obere Klinkenhebel 32 in Richtung auf seine Schließstellung hin vorgespannt.

Der am Ende des anderen Seitenteiles angebrachte und von dort vorstehende Endbolzen 14 wird mit seinem Formteil 15 beim Zusammendrücken der beiden Seitenteile 2 und 3 so lange gegen das Ende des Seitenteiles 2 gedrückt, bis das Formteil 15 in die entsprechend geformte Aufnahmeöffnung der Sperrklinke, ausgebildet zwischen den Klinkenhebeln 33 und 32, vollständig eingeführt ist. Im Endzustand ist das Formteil 15 innerhalb der Sperrklinke vollständig aufgenommen und ein unerwünschtes Öffnen desselben durch die Klinkenhebel formschlüssig verhindert. Die Feder 37 stellt dabei sicher, daß der bewegliche Klinkenhebel 32 mit seiner innenliegenden Formfläche auch in eine entsprechend gute Anlage an das Formteil 15 gedrückt wird. Der obere Klinkenhebel 32 ist über seinen Drehpunkt 34 hinaus verlängert und in geeigneter Weise nach oben abgebogen. Dort ist an ihm ein Zugstrang 35 in Form eines dünnen Stahlseiles eingehängt, der vom Einhängepunkt aus zunächst über einen innerhalb des Rohres angebrachten Umlenkbolzen 36 geführt und von dort aus innerhalb des Rohrkörpers des Seitenteiles 2 fortgeleitet wird. An einer anderen (in Fig. 6 nicht gezeigten) Stelle des Rohrkörpers 2, die vorzugsweise in der Nähe des entsprechenden Drehgelenkes 6 liegt, wird der Zugstrang 35 wieder in geeigneter Form aus dem Rohrkörper 2 herausgeführt und dann, durch geeignete Halterungen an den Kettenstrangabschnitten 4 abgestützt, so zur Seitenkette 8 weitergeleitet, daß auch beim Auflegen der hinteren Halterung das freie Ende des Zugstranges stets im Bereich der Seitenkette 8, somit auf der Außenseite des Rades verbleibt. Von dort aus kann durch Ziehen am freien Ende des Zugstranges 35 der Formschluß durch die Klinke gelöst werden und eine Demontage der hinteren Halterung unschwer erfolgen. Um die Führung des Zugstranges 35 der Krümmung des Seitenteiles, innerhalb dessen sie verläuft, anzupassen, empfiehlt es sich, längs der Führungsstrecke mehrere Umlenksbolzen 36 vorzusehen, durch die der Zugstrang 35 abgestützt und damit eine tangentiale Annäherung an die gekrümmte Kurvenform des Seitenteiles erreicht wird. Selbstverständlich ist es dabei auch möglich, auf solchen Umlenkbolzen kleine, frei drehbare Umlenkräder anzuordnen, um ein besonders leichtes Bewegen des Zugstranges 35 zu erzielen. Es hat sich im praktischen Versuch jedoch gezeigt, daß die Anordnung kleiner Umlenkbolzen, die vielleicht mit einer Teflonschicht versehen sind, vollkommen für eine einwandfreie Funktion des Mechanismusses ausreichend ist.

Die Anordnung des ersten Umlenkbolzens 36 relativ zum Einhängepunkt des Zugstranges 35 am Hinterteil des oberen Klinkenhebels 32 sollte so vorgenommen werden, daß die Führung des Zugstranges 35 zwischen Umlenkbolzen 36 und Befestigungspunkt am oberen Klinkenhebel 32 eine Richtung aufweist, die etwa senkrecht verläuft zu einer Linie, die durch den Klinkendrehbolzen 34 und den Befestigungspunkt des Zugstranges 35 am verlängerten Hinterteil des oberen Klinkenhebels 32 läuft, so daß in jedem Fall bei Zug auf den Zugstrang 35 der Zugkraft in ihrem Angriffspunkt am oberen Klinkenhebel 32 ein möglichst großer Hebelarm für ein leichtes Öffnen der Sperrklinke zugeordnet ist.

Das Formteil 15 am Ende des vorstehenden Endbolzens 14 ist in den Figuren nur beispielshalber als ein im Querschnitt runder Körper dargestellt. Um eine möglichst gute Klinkwirkung zu erzielen, könnten durchaus auch anders geformte Formelemente eingesetzt werden, so z. B. Formkörper mit im Querschnitt dreieckförmiger, kegelförmiger, halbkreisförmiger oder mit einer sonstigen geeigneten Formgebung.

Eine ebenfalls sehr vorteilhafte, in den Figuren jedoch nicht gezeigte Ausführungsform für die hintere Halterung besteht auch darin, daß für den Fall eines Andrückens der offenen Enden der Seitenteile 2 und 3 im Schließzustand aneinander (also ohne Sperrklinke, reines Andrücken) ein Permanentmagnet in das Ende eines Seitenteiles eingelassen ist und das Ende des anderen Seitenteiles aus einem geeigneten magnetisierbaren Material besteht, so daß im Schließzustand dann auch die Magnetkräfte noch eine zusätzliche Schließkraft ergeben. Wird diese magnetische Schließkraft ausreichend groß gewählt, dann kann möglicherweise die Vorspannung der Federn den Drehgelenken 6 und 7 im geschlossenen Zustand der Halterung relativ klein gehalten werden, da dann die vom Magnet aufgebrachte Anzugskraft ein unerwünschtes Öffnen der hinteren Halterung schon weitestgehend selbst verhindert.

Vorzugsweise wird das Mittelteil 1 etwa so ausgebildet, daß es sich vom Mittelpunkt des Gelenkes 6 zu dem des Gelenkes 7 über einen Bogenbereich zwischen 60° und 90° erstreckt.

Die Federeinrichtungen in den Drehgelenken 6 und 7 können mit Vorteil auch so ausgelegt werden, daß die zum Abspreizen der Seitenteile 2 und 3 erforderlichen Bedienungskräfte nicht proportional, sondern weit unterproportional mit zunehmender Aufspreizung anwachsen. Eine gewünschte Federkennlinie kann dabei z. B. durch Zusammenschalten von mehr als einer Feder (oder auch Federart) ) durch unterschiedliche Dickenausbildung der wirksamen Federschenkel über der Schenkellänge oder durch andere, dem Fachmann geläufige Maßnahmen erzielt werden. Es kann für bestimmte Einsatzfälle auch günstig sein, in den Drehgelenken z. B. Rasten bei voller Ausspreizung der Seitenteile 2 und 3 vorzusehen. In diesem Fall würden die gespreizten Seitenteile 2 und 3 in ihrer maximalen Spreizstellung einrasten, so daß das Überstreifen über das Fahrzeugrad 5 dann ohne Anwenden einer Spreizkraft durch die Bedienungsperson erfolgen könnte. Dann sind allerdings geeignete Vorrichtungen (etwa in Form von Druckbolzen) kleinen Hebelschaltern o.ä.) nötig, um ein Ausrasten der Seitenteile 2 und 3 auf der Radinnenseite zu ermöglichen, wonach dann diese unter der Wirkung der Federvorspannung in den Drehgelenken 5 und 6, wie bereits beschrieben, in ihre Montage-Endstellung springen. Hierbei kann sogar eine einzige Entrast-Einrichtung, etwa am Mittelteil 1, vorgesehen sein, durch die gleichzeitig an beiden Drehgelenken 6 und 7 die genannten Raststellungen aufgehoben werden.

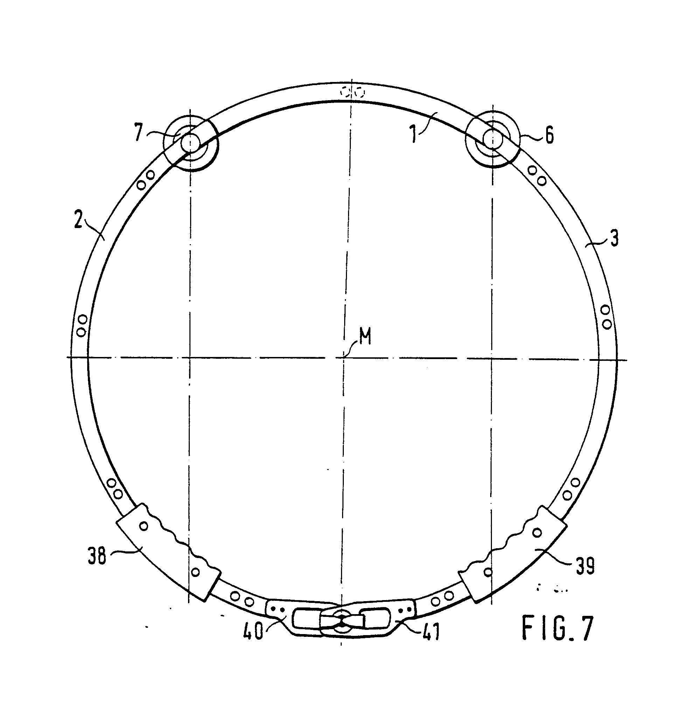

In Fig. 7 ist eine weitere Ausführungsform für eine innere Halterung einer Gleitschutzvorrichtung dargestellt und zwar in einer Draufsicht auf die Reifeninnenseite, wobei zur Vereinfachung der Darstellung jedoch die Reifenkonturen ebenso wie die Spurketten weggelassen sind und nur die reine Halterung gezeigt ist (in gleicher Blickrichtung wie bei der Darstellung nach Fig. 2). Ebenso wie bei der Ausführungsform, die in den Fig. 1 und 2 dargestellt ist, wird wieder ein Mittelteil 1 aus gebogenem Flachstahl mit zwei an diesem gelenkig über Drehgelenke 6 und 7 befestigten Seitenteilen 2 und 3 eingesetzt, wobei auch diese Seitenteile 2 und 3 aus gebogenem Flachstahl gefertigt sind. Mit geringem Abstand von den Enden der Seitenteile 2 und 3 sind auf diesen Handgriffe 38 und 39 angebracht, die vorzugsweise aus einem geeigneten Kunststoff bestehen und nicht nur die Handhabung der Gleitschutzvorrichtung bei deren Montage durch die Bedienungsperson erheblich vereinfachen, sondern überdies in ihrer Lage und ihrer Masse so gewählt sind, daß die Halterung in derselben geschlossenen Form, in der sie in Fig. 7 dargestellt ist, bezüglich ihres Drehmittelpunktes M hinsichtlich freier Massenkräfte bei einer Drehung ausgeglichen ist. Da solche freien Massenkräfte im wesentlichen durch die Massen der Drehgelenke 6 und 7 ausgelöst werden könnten, bedeutet dies im praktischen Fall, daß die Handgriffe 38 und 39 bezüglich ihrer Lage wie ihrer Masse im wesentlichen zum Ausgleich der Massen der Drehgelenke 6 und 7 angeordnet werden müssen. Die Lage der Handgriffe 38 und 39 ist daher in der in Fig. 7 gezeigten Ausführungsform für eine Halterung etwa spiegelsymmetrisch bezüglich des Drehmittelpunktes M zu dem entsprechend gegenüberliegenden Drehgelenk 6 bzw. 7.

**Patentansprüche**

1. Gleitschutzvorrichtung für Fahrzeugreifen mit einer in montiertem Zustand der Vorrichtung gegen die Innenseite und die Außenseite des Reifens zur Anlage kommenden inneren und äußeren Halterung für sich über die Reifenlauffläche erstreckende Kettenstrangabschnitte, bei der die innere Halterung im montierten Zustand im wesentlichen kreisförmig geschlossen ausgebildet ist und ein starres Mittelteil sowie zwei starre, an diesem jeweils über ein Drehgelenk verschwenkbar befestigte Seitenteile aufweist, die zum Überstreifen der inneren Halterung über die Reifenlauffläche vom Mittelteil aus nach außen aufklappbar, in Schließrichtung der inneren Halterung über Federeinrichtungen vorgespannt und an ihren freien Enden mit im montierten Zustand der inneren Halterung verrastend wirksamen Verschlußgliedern versehen sind, dadurch gekennzeichnet, daß die Federeinrichtungen (24) aus an den Drehgelenken (6; 7) angeordneten Spiral-, Schenkel- oder Blattfedern bestehen, deren Vorspannung so gewählt ist, daß im geschlossenen Zustand der inneren Halterung die Seitenteile (2; 3) durch die Federeinrichtungen (24) unter Druck gegen in Schließrichtung der inneren Halterung wirksame Endanschläge (23) in Anlage gehalten sind.

2. Gleitschutzvorrichtung nach Anspruch 1, dadurch gekennzeichnet, daß in jedem Drehgelenk (6; 7) Endanschläge (22; 23) zur beidseitigen Begrenzung der Verschwenkbewegung des angelenkten Seitenteiles (2; 3) relativ zum Mittelteil (1) angeordnet sind.

3. Gleitschutzvorrichtung nach Anspruch 1 oder 2, mit an den Drehgelenken (6; 7) angeordneten Spiralfedern, dadurch gekennzeichnet, daß die Vorspannung jeder Spiralfeder (24) von der Außenseite der Drehgelenke (6; 7) her einstellbar ist.

4. Gleitschutzvorrichtung nach Anspruch 3, dadurch gekennzeichnet, daß das radial innen liegende Ende (27) der Spiralfeder (24) in einen am Mittelteil (1) der inneren Halterung befestigten Drehbolzen (26) eingreift, der relativ zum Mittelteil (1) verdrehbar und in jeder Verdrehstellung von außen her arretierbar ist.

5. Gleitschutzvorrichtung nach einem der Ansprüche 1, 3 oder 4, dadurch gekennzeichnet, daß bei geschlossener hinterer Halterung die Endanschläge durch eine formschlüssige Verriegelung der Enden (11; 12) der Seitenteile (2; 3) miteinander ausgebildet sind.

6. Gleitschutzvorrichtung nach Anspruch 5, dadurch gekennzeichnet, daß das Mittelteil (1) und die Seitenteile (2; 3) der inneren Halterung aus gebogenem Metallrohr geformt sind, daß das Metallrohr eines Seitenteiles (2) in seinem Endbereich (31) einen sich erweiternden Querschnitt aufweist, innerhalb dessen eine Verriegelungsklinke (32, 33) angeordnet ist, und daß vom Ende des Metallrohres des anderen Seitenteiles ein Verriegelungsbolzen (14, 15) vorsteht, der zum Schließen der inneren Halterung in die Verriegelungsklinke (32, 33) einführbar und in dieser Lage verriegelbar ist.

7. Gleitschutzvorrichtung nach Anspruch 6, dadurch gekennzeichnet, daß die Verriegelungsklinke in Form einer in Schließstellung federvorgespannten Halteschere (32, 33) ausgebildet ist.

**Claims**

1. Antiskid device for vehicle tyres with inner and outer holders for chain strand sections extending over the running surface of the tyre, which holders engage the inner surface and the outer surface of the tyre when the device is installed, the inner holder being of substantially circular closed shape in the installed state and having a rigid central portion and two rigid side portions which are pivotally connected to it by means of a respective pivotal joint and which, for the purpose of pulling the inner holder over the running surface of the tyre, may be swung outwardly from the central portion, are biassed in the closing direction of the inner holder by means of spring devices and are provided at their free ends with locking members which have a locating function in the installed state of the inner holder, characterised in that, the spring devices (24) comprise spiral, leg or leaf springs which are arranged on the pivotal joints and whose biassing force is so selected that in the closed state of the inner holder the side portions (2; 3) are maintained under pressure by the spring devices in engagement with end abutments (23) operative in the closing direction of the inner holder.

2. Antiskid device as claimed in claim 1, characterised in that end abutments (22; 23) are arranged in each pivotal joint (6; 7) to limit the pivotal movement of the hinged side portion (2; 3) in both directions relative to the central portion (1).

3. Antiskid device as claimed in claim 1 or 2 with spiral springs arranged in the joints (6; 7), characterised in that the biassing force of each spiral spring (24) may be adjusted from the outer side of the pivotal joints (6; 7).

4. Antiskid device as claimed in claim 3, characterised in that the radially inner end (27) of the spiral springs (24) engages in a rotary peg (26) which is secured to the central portion (1) of the inner holder, is rotatable relative to the central portion (1) and may be locked from the exterior in any rotary position.

5. Antiskid device as claimed in one of claims 1, 3 or 4, characterised in that when the rear holder is closed the end abutments are formed by a form-sealing interlocking of the ends (11; 12) of the side portions (2; 3) with one another.

6. Antiskid device as claimed in claim 5, characterised in that the central portion (1) and the side portions (2; 3) of the inner holder are formed of bent metal tube, that the metal tube of a side portion (2) has a diverging cross-section in its end region (31) within which a locking catch (32; 33) is arranged, and that projecting from the end of the metal tube of the other side portion is a locking peg (14, 15) which may be introduced into the locking catch (32; 33) to close the inner holder and may be locked in this position

7. Antiskid device as claimed in claim 6, characterised in that the locking catch is in the form of pivotally connected claws (32; 33) spring biassed into the closed position.

**Revendications**

1. Dispositif antidérapant pour pneumatiques de véhicules, comportant une fixation intérieure et extérieure entrant, dans l'état monté du dispositif en contact avec la face intérieure et la face extérieure du pneumatique, pour des sections de chaîne s'étendant sur la surface de roulement du pneumatique, dans lequel la fixation intérieure a, à l'état monté, une conformation fermée sensiblement circulaire et comporte une partie centrale rigide, ainsi que deux parties latérales rigides fixées chacune à celle-ci de façon à pouvoir pivoter grâce à une articulation à charnière, qui comportent, pour recouvrir la fixation intérieure sur la surface de roulement du pneumatique, des organes de fermeture pouvant être relevés vers l'extérieur, précontraints dans le sens de fermeture de la fixation intérieure au moyen de dispositifs élastiques et ayant un effet d'encliquetage à leurs extrémités libres avec la fixation intérieure à l'état monté, caractérisé en ce que les dispositifs élastiques (24) comprennent des ressorts spiral, à branches ou à lames placés sur les articulations à charnière (6; 7), dont la précontrainte est choisie de façon qu'à l'état fermé de la fixation intérieure, les parties latérales (2; 3) soient maintenues sous pression en contact avec les butées terminales (23) agissant dans le sens de fermeture de la fixation intérieure.

2. Dispositif antidérapant selon la revendication 1, caractérisé en ce que, dans chaque articulation à charnière (6; 7), des butées terminales (22; 23) sont disposées pour limiter des deux côtés le mouvement de pivotement de la partie latérale articulée (2; 3) par rapport à la partie centrale (1).

3. Dispositif antidérapant selon la revendication 1 ou 2, comportant des ressorts spiral placés sur les articulations à charnière (6; 7), caractérisé en ce que la précontrainte de chaque ressort spiral (24) peut être reglée de l'extérieur des articulations à charnière (6; 7).

4. Dispositif antidérapant selon la revendication 3, caractérisé en ce que l'extrémité radialement intérieure (27) du ressort spiral (24) s'engage dans une pivot (26) fixé à la partie centrale (1) de la fixation intérieure, qui peut tourner par rapport à la partie centrale (1) et peut être bloqué de l'extérieur dans chaque position angulaire.

5. Dispositif antidérapant selon l'une des revendications 1, 3 ou 4, caractérisé en ce que, lorsque la fixation postérieure est fermée, les butées terminales sont constituées par un verrouillage à concordance de forme des extrémités (11; 12) des parties latérales (2; 3) entre elles.

6. Dispositif antidérapant selon la revendication 5, caractérisé en ce que la partie centrale (1) et les parties latérales (2; 3) de la fixation intérieure sont constituées par un tube métallique arqué, en ce que le tube métallique d'une partie latérale (2) présente, dans sa zone terminale (31), une section droite s'élargissant à l'intérieur de laquelle est placé un cliquet de verrouillage (32, 33) et en ce qu'il fait saillie, de l'extrémité du tube métallique de l'autre partie latérale, une broche de verrouillage (14, 15) qui peut être introduite, pour la fermeture de la fixation intérieure, dans le cliquet de verrouillage (32, 33) et être verrouillée dans cette position.

7. Dispositif antidérapant selon la revendication 6, caractérisé en ce que le cliquet de verrouillage se présente sous la forme d'une pince de retenue (32, 33) précontrainte élastiquement vers la position de fermeture.

FIG.1

0 116 676

FIG.2

FIG.5

FIG.6

FIG.3

FIG.4

FIG. 7